# EUROPEAN PATENT APPLICATION

(11) **EP 0 536 846 A2**
(43) Date of publication of application: **14.04.1993**
(21) Application number: 92203099.4
(22) Date of filing: 09.10.1992
(51) Int. Cl.: B60P 1/00, B60P 3/00

(54) **Assembly of a vehicle, such as a removal van, and a ladder lift unit**

(30) Priority: 22.11.1991 NL 9101969; 10.10.1991 BE 9100930; 05.02.1992 BE 9200124
(71) Applicant: NV NUYTS ORB, B-2360 Oud-Turnhout (BE)
(72) Inventor: Nuyts, Henry, B-2470 Retie (BE)
(74) Representative: Lips, Hendrik Jan George, Ir.

(57) **Abstract**

Assembly of a vehicle (1) provided with a container (2), such as a removal van, a furniture transport vehicle or the like, and a ladder lift unit (3), comprising a basic portion (4), a ladder lift (5) pivotably connected therewith and means for bringing the ladder lift in a certain position in relation to the basic portion, and securing it. The vehicle (1) and the ladder lift unit (3) have been constructed such, that when the ladder lift unit does not have to be used, it can be brought on to the roof of the container of the vehicle in such a position that the ladder lift (5) of the unit will in transport position be in longitudinal direction and in almost horizontal position on the roof of the container (2) of the vehicle (1). Further, means (13) are present for locking the ladder lift (5) and/or the basic portion (4) of the ladder lift unit (3) in relation to the container (2).

## Description

The invention relates to an assembly of a vehicle provided with a container, such as a removal van, a furniture removal van or the like and a ladder lift unit, comprising a basic portion, a ladder lift pivotably connected therewith and means for bringing the ladder lift into a certain position in relation to the basic portion and securing it.

Herein, the ladder lift is understood to mean that part of the unit which substantially has the shape of a ladder and along which the ladder lift platform is movable, on which platform the objects to be transported upward or downward can be placed.

In carrying out removals, one very often employs a ladder lift unit, which can be arranged in the street and with which goods can be transported directly to or from a higher storey of a building.

Such ladder lift units can be pulled along on a trailer behind the vehicle, but are not suitable for being transported over long distances, since they are only allowed to have a limited speed in connection with its stability.

Also, a ladder lift causes difficulties in parking and driving in the city and is in the way when the vehicle is unloaded and it is possibly not needed.

When the vehicle already pulls a trailer or has the shape of a semitrailer, taking along a ladder lift unit in addition is prohibited.

Trucks, the loading frames of which have been provided with a ladder lift fixedly mounted thereon, require a large investment, while double transport, namely of both the removal van and the truck with the ladder lift, is required as well.

The invention now seeks to remove these difficulties and to that end provides for that the vehicle and the ladder lift unit are executed such, that when the ladder lift unit is not needed, it can be brought on to the roof of the container of the vehicle in such a position that in transport position, the ladder lift of the ladder lift unit is in longitudinal direction and in almost horizontal position on the roof of the container of the vehicle.

In this way, it is achieved, that the ladder lift unit can always be taken along with the vehicle and is available at the desired moment. Naturally, it will be arranged for, that the ladder lift unit takes up the smallest possible height, when in transport position it is on the roof of the vehicle.

In particular it can be provided for, that the vehicle has a loading lift and the loading plane of the loading platform of said loading lift movable in vertical direction, can be brought in substantially the same plane as the plane of the roof of the container of the vehicle on which the ladder lift unit is situated and the ladder lift unit is provided with means, in the shape of one or more wheels or the like, for bringing the ladder lift unit on the loading platform of the loading lift and vice versa.

A loading lift with a loading platform, the loading plane of which can be brought in substantially the same plane as the plane of the roof of the vehicle, has been described in EP-A-0416701.

As is usually the case, the loading lift will be situated on the back wall of the container. Now when the basic portion has been brought on the loading platform, the latter can be moved downward while simultaneously pivoting the ladder lift of the ladder lift unit in relation to the basic portion. To that end, means can be employed which are used to pivot the ladder lift in relation to the basic portion. Thereby, the ladder lift can always be kept free of the edge of the roof of the vehicle.

Instead of a loading lift or possibly in combination therewith, the vehicle can be provided with hoisting means for bringing the ladder lift unit from the roof of the vehicle on to the ground and vice versa.

For preventing displacement of the ladder lift unit in relation to the roof of the container, or in relation to the loading platform or to the other hoisting means during downward and upward movement of the ladder lift unit, it can be provided for, that means are present for locking the ladder lift unit to the roof of the container, to the loading platform or to the hoisting means.

The means for locking the ladder lift unit to the roof of the container, to the loading platform or to the hoisting means can at one side be mounted to the basic portion of the ladder lift unit and at the other side to the roof of the container or to the loading lift or the other hoisting means.

These locking means can also be used when the loading lift has been mounted to a side wall of the container. However, with that, one must pay attention to the position of the centre of gravity of the ladder lift unit in bringing its basic portion on to the loading platform.

When the ladder lift unit has been brought on to the ground by means of the loading lift, it can be driven across the ground to the place where it should be used. In order to facilitate this driving as much as possible, it can be provided for, that the wheels connected to the basic portion of the ladder lift unit are situated at that side of the basic portion which in transport position are directed towards the telescopic free end of the ladder lift.

With that, in particular the wheels can be mounted to a support or supports which are movable in relation to the basic portion, substantially in longitudinal direction of the vehicle, when the ladder lift unit has been mounted thereon.

In this way, the centre of gravity of the ladder lift unit can come to lie approximately above said pulled-out wheels, whereby raising and moving the unit is easily possible. It will be obvious, that here the ladder lift in relation to the basic portion will be in the same position as when the unit has been mounted to the roof of the container.

With that, the possibility exists, that the support or supports have been substantially movably incorporated in the plane of the basic portion and can be blocked in telescoped-out position. Telescoping in and out can be take place both manually and by other means, such as a pneumatic or hydraulic cylinder.

There is also the possibility of mounting the wheel or wheels to means, which are connected to the basic portion in such a way, that the wheels can be brought at a greater distance from the basic portion in almost vertical direction. These means can be in the form of a frame, which has been pivotally connected to the basic portion and can pivot in relation thereto. Pivoting will be effected by a pressurized fluid cylinder or by such means.

With that, it can be favourable when a wheel can be releasably connected to the ladder lift, which wheel is at a distance from the wheels connected to the basic portion, and is adjustable in vertical height in relation to the ladder lift.

There is also the possibility to provide the ladder lift, at a free end thereof, with at least one wheel which, with the ladder lift in horizontal position, extends to underneath the ladder lift for supporting the free end of the ladder lift in moving the ladder lift unit.

To facilitate manoeuvring the ladder lift unit in bringing it in operating position, it can be provided for, that the basic portion consists of a supporting frame and a rotating frame, with which the ladder lift has been pivotably connected, in which means, such as a rotating ring, are situated between both frames, such that the frames can rotate in relation to one another around an axis, which is substantially square to the plane of the basic portion.

The supporting frame, which possibly can be provided with the wheels, can then be put down in a relatively arbitrary position, after which the rotating frame can be rotated such, that the ladder lift is in the most favourable position.

Such a structure can be applied in particular when one does not want to remove the ladder lift unit from the loading platform or from the roof of the container. On erecting the unit on the roof of the container or in the highest position of the loading platform, the ladder lift can bridge the maximum heigth.

According to a further development of the invention, the supporting frame can consist of a sliding frame and a basic frame, the sliding frame being connected to the ladder lift, whether or not by a rotating frame, and means being present between both first-mentioned frames, for slidably and securably connecting both of these frames.

There is also the possibility, that the rotating frame consists of a sliding frame and a basic frame, the sliding frame being connected to the ladder lift and means being present between both last-mentioned frames, for slidably and securably connecting both frames. With that, one or more wheels can be connected to the rotating frame.

An assembly according to the invention can also be characterized in that the basic portion of the ladder lift unit is provided with means for supporting the basic portion in relation to the loading platform of the ladder lift, when the basic portion has been mounted at a distance above the loading plane of the loading platform situated under the plane of the roof of the container.

In that case, it will not be absolutely necessary to use a loading lift, of which the plane of the loading platform can be brought at the level of the plane of the roof of the vehicle's container.

The means for supporting the basic portion on the loading platform of the loading lift can be collapsible or mountable supports which may be provided with wheels and locking parts.

Although a ladder lift unit with a ladder lift was described in the above, it will be obvious, that the ladder lift as such can also have the shape of a telescopically slidable guiding profile, of a hoisting device or the like. One can also use guiding profile or hoisting device for bringing a platform on which goods can be positioned, upward and downward.

The invention is further explained by means of embodiments, illustrated in the drawing, in which:
fig. 1 shows a side view of a vehicle, such as for removal or furniture transport, provided with a container with ladder lift unit and loading lift with the loading platform of the loading lift in a high and low position;
fig. 2 shows a side view corresponding to fig. 1, but with the ladder lift in several of its operating positions on the roof of the container;
fig. 3 shows a side view corresponding to fig.1, but with the ladder lift unit positioned on the loading platform of the loading lift;
fig. 4 shows a side view corresponding to fig. 3 with the ladder lift in various operating positions;
fig. 5 shows a view corresponding to fig. 4 with the loading platform of the loading lift moved downward and with the loading lift in various operating positions;
fig. 6 shows a rear view of the vehicle with ladder lift unit and loading lift according to fig. 5 with the ladder lift rotated around a vertical axis across 90° in relation to the position of fig. 5;
fig. 7 shows a plan view of the vehicle according to fig. 1;
fig. 8 shows a rear view of a vehicle with ladder lift unit, at which it can be mounted countersunk in the roof of the vehicle's container;
fig. 9 shows a side view corresponding to fig. 1, but with a ladder lift platform mounted to the ladder lift;
fig. 10 shows a side view corresponding to fig. 5, but of a slightly modified embodiment of the ladder lift unit with the ladder lift in various positions;
fig. 11 shows a side view of an embodiment of a ladder lift unit in the transport position;
figs. 12, 13 and 14 show side views corresponding to fig. 11, but with portions of the ladder lift unit in such a position that the unit is movable;
figs. 15 and 16 show side views corresponding to fig. 12 or 13, the ladder lift being provided with a wheel support releasably connected therewith;
fig. 17 shows a side view corresponding to fig. 14, but of a slightly modified embodiment of the ladder lift unit;
fig. 18 shows a side view of the ladder lift unit according to fig. 11 in its operating position;
fig. 19 shows a side view of a slightly modified embodiment of a ladder lift unit mounted on the roof of the container of a vehicle;
figs. 20 - 23 show side views corresponding to fig. 20, with the ladder lift unit in subsequent positions in bringing the unit from the transport position to the operating position;
fig. 24 shows a plan view of the assembly of fig. 23;
fig. 25 shows a rear view of the assembly of fig. 23, with the ladder lift in a position rotated across 90°;
fig. 26 shows a side view corresponding to fig. 23, with the ladder lift in a position rotated across 180°;
fig. 27 shows a side view corresponding to fig. 26, but with the ladder lift pivoted to the horizontal position;
fig. 28 shows a side view corresponding to fig. 27, with the parts of the ladder lift unit in such a position that it is movable;
fig. 29 shows a side view corresponding to fig. 28, with the ladder lift unit in the position from which it can be brought to the operating position as indicated with dash lines;
fig. 30 shows a side view corresponding to fig. 1, but with a different construction of the loading lift;
fig. 31 shows a side view corresponding to fig. 30, with the ladder lift unit in a partially telescoped out position;
fig. 32 shows a side view corresponding to fig. 31, but with the ladder lift unit in a position telescoped out further;
figs. 33 and 34 show side views corresponding to fig. 32 in bringing the ladder lift unit downward by means of the loading lift.
fig. 35 shows a side view corresponding to fig. 30, but of a slightly modified embodiment of a ladder lift unit; and
figs. 36 and 37 show side views corresponding to fig. 35, but with the ladder lift unit in a few positions in bringing it downward.

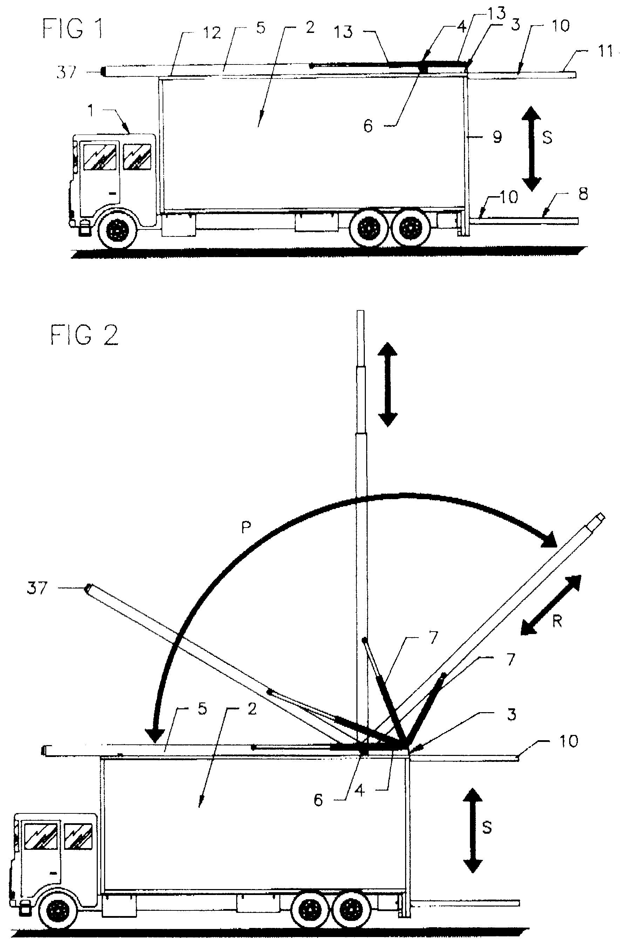

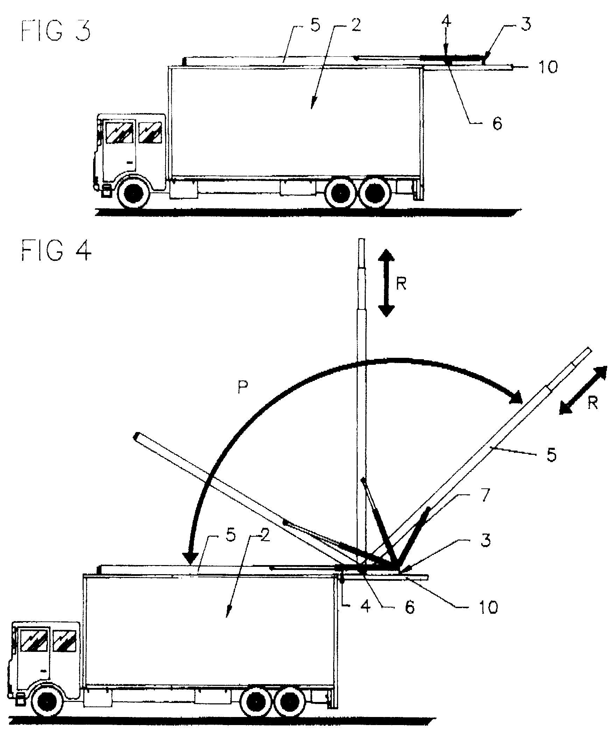

The figs. 1 to 10 show a vehicle 1 for removal or furniture transport or the like, provided with a container 2 on which a ladder lift unit 3 has been mounted. The ladder lift unit 3 comprises the basic portion 4 and the ladder lift 5, which has been pivotably connected to the basic portion 4 at point 6. Between the basic portion 4 and the ladder lift 5, a pressurized fluid cylinder 7 has been mounted, so that both parts can be rotated in relation to each other. In the figures 2 and 4, the angle across which the ladder lift 5 can be rotated is indicated by the arrow P.

Further, the loading lift 8 has been mounted to the container 2, said lift substantially consisting of the vertical guides 9 and the loading platform 10, which is movable in vertical direction across the guides 9, as indicated by the arrow S. The loading platform 10 can be mounted rotatably in a way not further indicated, so that it can be brought to a vertical position during driving of the vehicle. The loading plane 11 of the loading platform 10 can be brought in the same plane as the upper plane 12 of the container 2. In the figs. 1 and 2, the loading platform 10 is shown in two positions.

Fig. 2 shows that the ladder lift 5 can be pivoted to various positions with the help of the cylinder 7. Therein, the ladder lift can have parts not shown in detail, which are slidable in the direction of the arrow R. The basic portion 4 of the ladder lift unit 3 is here in the same position as during driving of the vehicle 1.

In each case, locking means 13 will be present between the basic portion 4 and the container 2 of the vehicle 1, for keeping the basic portion in place in relation to the container. The locking means 13 are not shown in detail, since they can have many different shapes. These can for example be hooks pivotably connected to the container, which can fall over pins mounted to the basic portion 4. The ladder lift 5 can additionally be connected to the container 2 by locking means.

Fig. 3 shows the possibility of bringing the basic portion 4 of the ladder lift unit 3 on to the loading platform 10 and locking it thereto, in a similar way as occurs to the container 2. Fig. shows the possibility of pivoting the ladder lift 5 to various positions in order to be able to employ it in the most advantageous position.

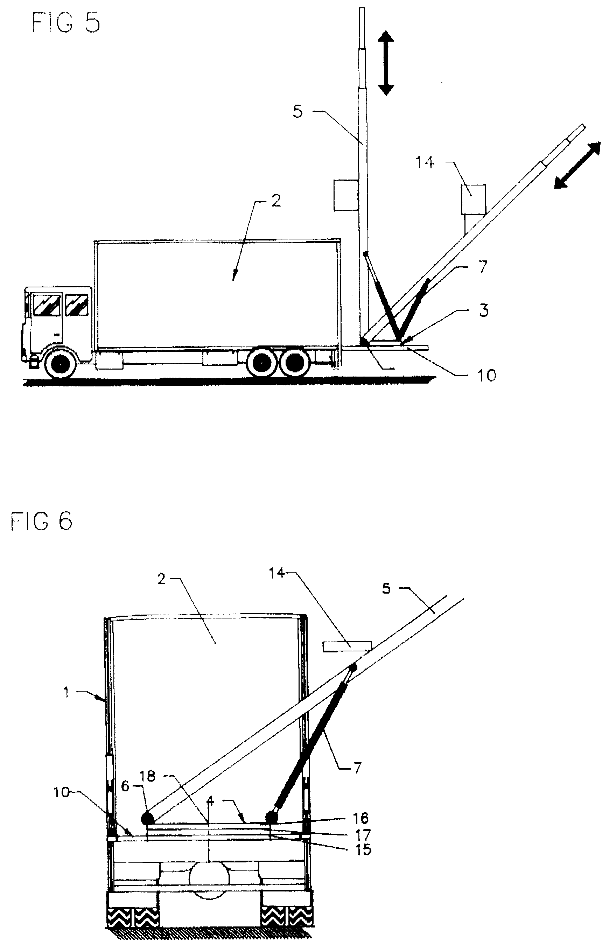

From the position shown in fig. 3, the loading platform 10 can be moved downward to the position shown in fig. 5. Therein, the ladder lift 5 will be gradually pivoted to the vertical position shown in 5 by means of the cylinder 7, so that the ladder lift 5 will always remain free of the container 2. The ladder lift 5 can also be pivoted further to the more horizontal position also shown in fig. 5. The ladder lift platform 14 can be mounted on the ladder lift 5, which platform can be brought downward or upward by means known per se and not further indicated, along the ladder lift for transport of objects, such as furniture.

As appears from fig. 6, the basic portion 4 can consist of a supporting frame 15, a rotating frame 16 and a rotating ring 17 therebetween. The supporting frame 15 bears on the container 2 or on the loading platform 10 and at point 6 the ladder lift 5 is pivotably connected to the rotating frame 16, which is rotatable around a vertical shaft 18 in relation to the supporting frame 15 by the rotating ring 17. Through this, the ladder lift 5 can be brought in the position shown in fig. 6 in relation to the vehicle 1.

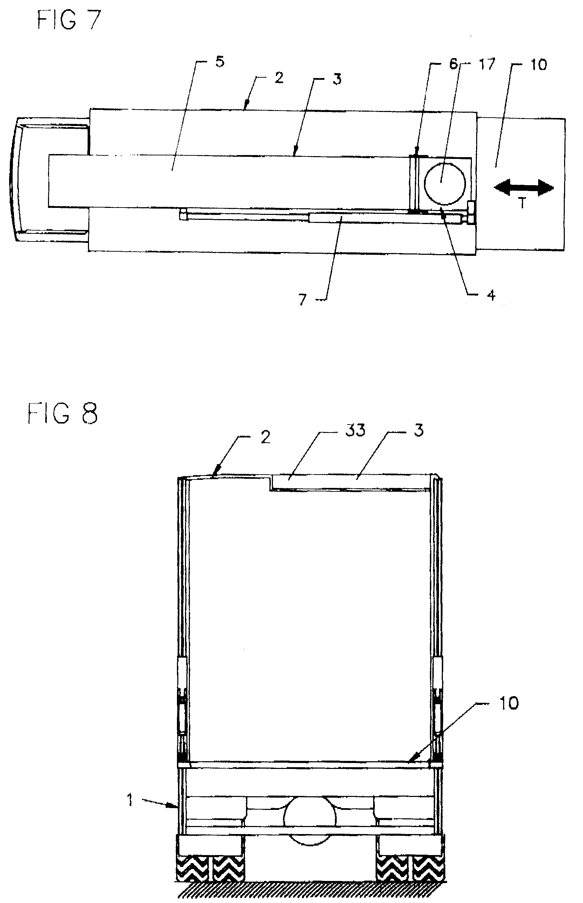

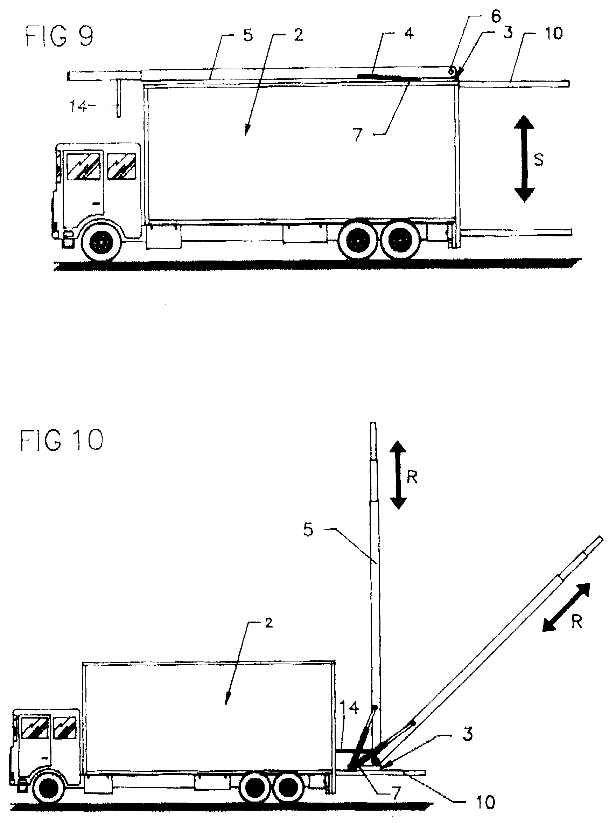

Fig. 7 shows a further plan view of the assembly described above, with the loading platform 10 in the position in which the ladder lift unit 3 can be pushed on to it or away from it in the direction of the arrow T.

While in fig. 7 the ladder lift unit 3 is mounted substantially in the longitudinal centre plane of the container 2, according to fig. 8 it can also be provided for, to mount the unit more to one side and provide the container 2 there with a recessed portion 33. Since one is limited to a maximum height of the vehicle with ladder lift unit, in this way one can gain loading space. In providing a recessed portion in the longitudinal centre plane of the container, one will obtain spaces of only little width at both sides thereof, which can be less easily utilized.

Fig. 9 shows a side view of an assembly in which the ladder lift platform 14 is mounted to the ladder lift 5, so that it need not be removed from the ladder lift during driving of the vehicle. The pivot point 6 between the ladder lift 5 and the basic portion 4 of the ladder lift unit 3 is now, as seen in the figure, at the right-hand side of the basic portion 4 and the pressurized fluid cylinder 7 is completely at the left-hand side of the pivot point 6. Fig. 10 shows the assembly of fig. 9 with the ladder lift 5 mounted on the loading platform 10 and in two different positions.

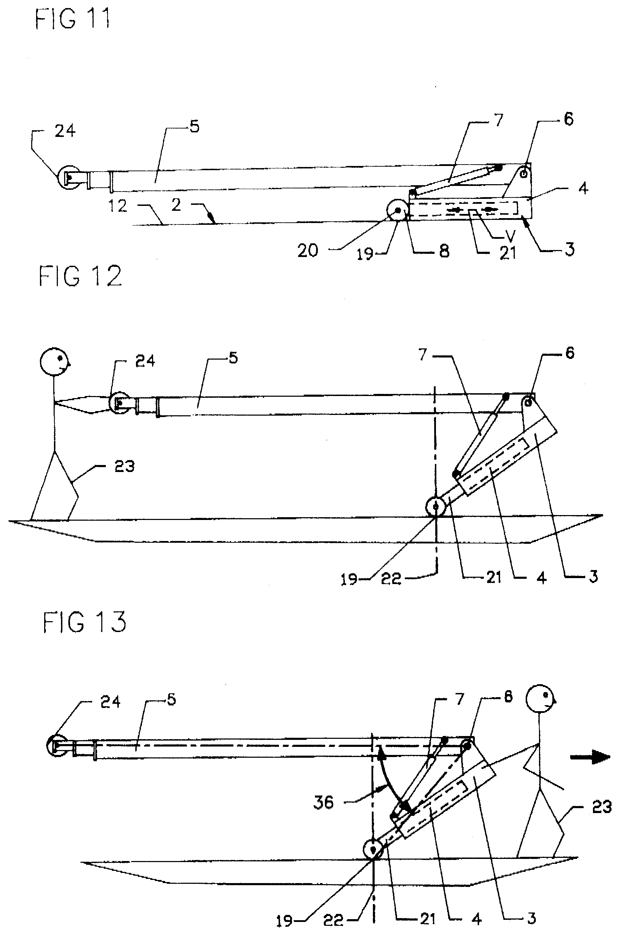

Fig. 11 shows the ladder lift unit 3 in the position in which it can be present on the upper plane 12 of the container 2. In order to facilitate displacement of the unit, the basic portion 4 is provided with wheels 19, the shafts 20 of which are connected to a support 21, which is movable in relation to the basic portion 4 in the direction of the arrow V and can be secured in the desired position. Naturally, the shafts 20 can be individually connected to a support 21, so that then two supports will be present.

Further, it should be mentioned that when the basic portion 4 consists of the supporting frame 15 and the rotating frame 16 in the way described above, the support or supports 21 can be both connected to the one and the other frame. Between both frames 15 and 16 one preferably will also mount locking means for preventing rotation of both frames in relation to each other, such as during transport of the ladder lift unit.

The figures 12 and 13 show the ladder lift unit in a position in which the supports 21 are slid outwardly over some distance in relation to the basic portion 4 and the cylinder 7 is operated such that the ladder lift 3 is rotated across a certain angle β in relation to the basic portion 4. By a proper choice of the position of the wheels 19 and of the angle of rotation, it can be achieved that the centre of gravity of the unit will approximately come to lie vertically above the wheels 19 in the position as shown in the figures 12 and 13. The centre of gravity will thus be approximately on the line 22. Because of this, a person, in the figures indicated diagrammatically at 23, can easily move the unit.

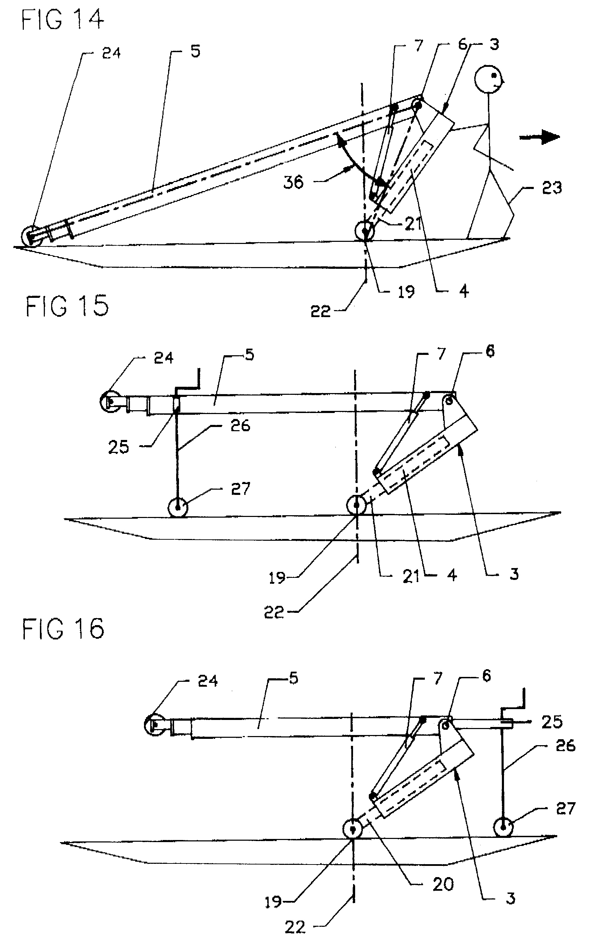

There is also the possibility of providing the free end 37 of the ladder lift 5 with a wheel 24, so that the unit can be moved in the way as shown in fig. 14. The wheel 24 can possibly be part of the means necessary to bring the ladder lift platform 14 upward en downward across the ladder lift 5.

As shown in the figures 15 and 16, the ladder lift 5 can be provided with a support 25 in which a height-adjustable rod 26 can be releasably received. A wheel 27 has been mounted at the bottom end of the rod. Depending on the construction of the ladder lift unit, and thus on the position of the centre of gravity, the support 25 can be situated at the one or the other end of the ladder lift 5.

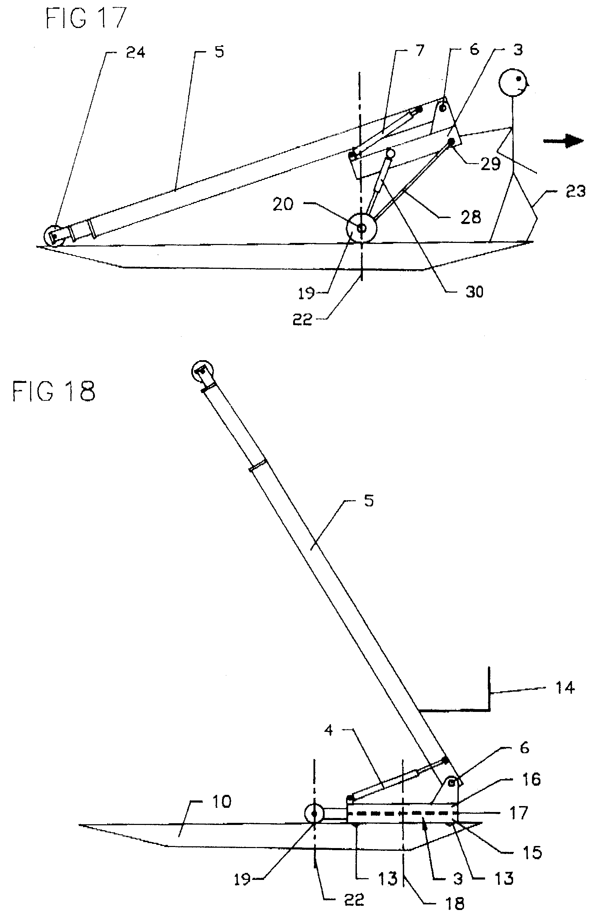

Fig. 17 shows the possibility of connecting the shafts 20 of the wheels 19 to a frame 28, which has one end 29 pivotably connected to the basic portion 4 and can be pivoted with the help of the pressurized fluid cylinder 30.

Fig. 18 shows the ladder lift unit in a position in which the supporting frame 15 of the basic portion 4 has been secured to a loading platform 10 by the locking means 13 and the ladder lift 3 has been brought to the operating position by means of the cylinder 7. The ladder lift 3 is pivotably connected to the rotating frame 16 at the point 6, said frame being able to rotate around the shaft 18 in relation to the supporting frame 15 by means of the rotating ring 17.

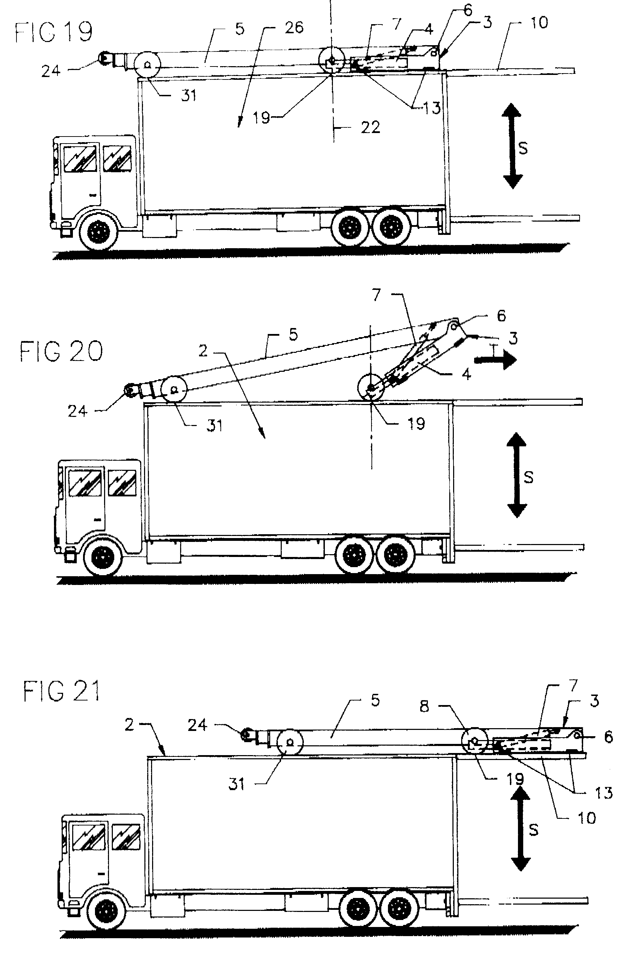

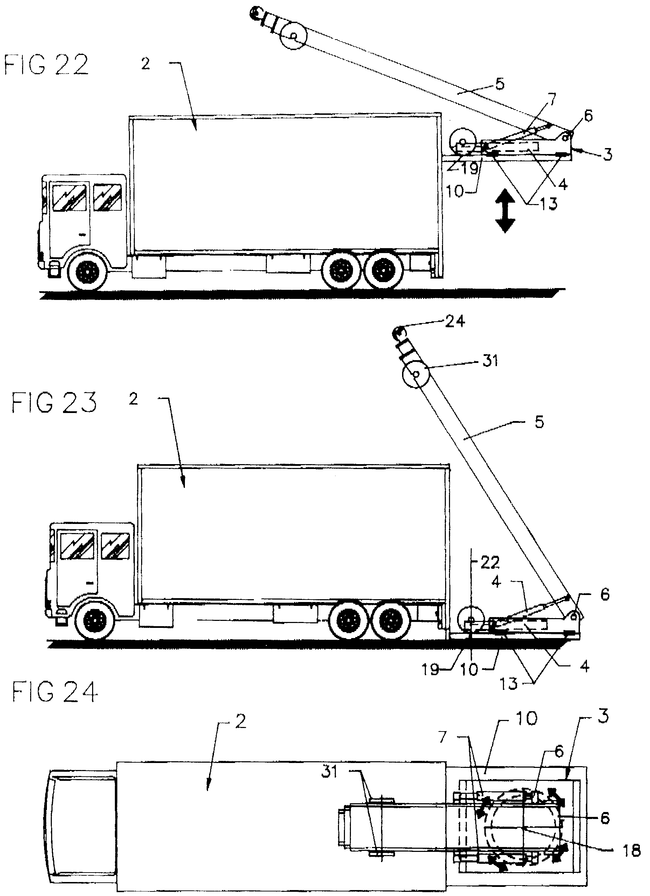

Fig. 19 shows a ladder lift unit mounted on the container 2 of a vehicle 1, wherein corresponding parts have been indicated with the same reference numbers as in the preceding figures. Here, the ladder lift 5 is provided with a large wheel, or two wheels 31. After releasing the locking means 13, the unit can be brought to the position as shown in fig. 20, thereafter to be moved further in the direction of the arrow T and on to the loading platform 10. Then, the unit is secured again with the locking means 13 and the loading platform 10 is brought downward as shown in the figures 22 and 23 while simultaneously pivoting the ladder lift 5 in relation to the basic portion 4 by means of the cylinder 7 in order to keep the ladder lift 5 free of the container 2 of the vehicle 1.

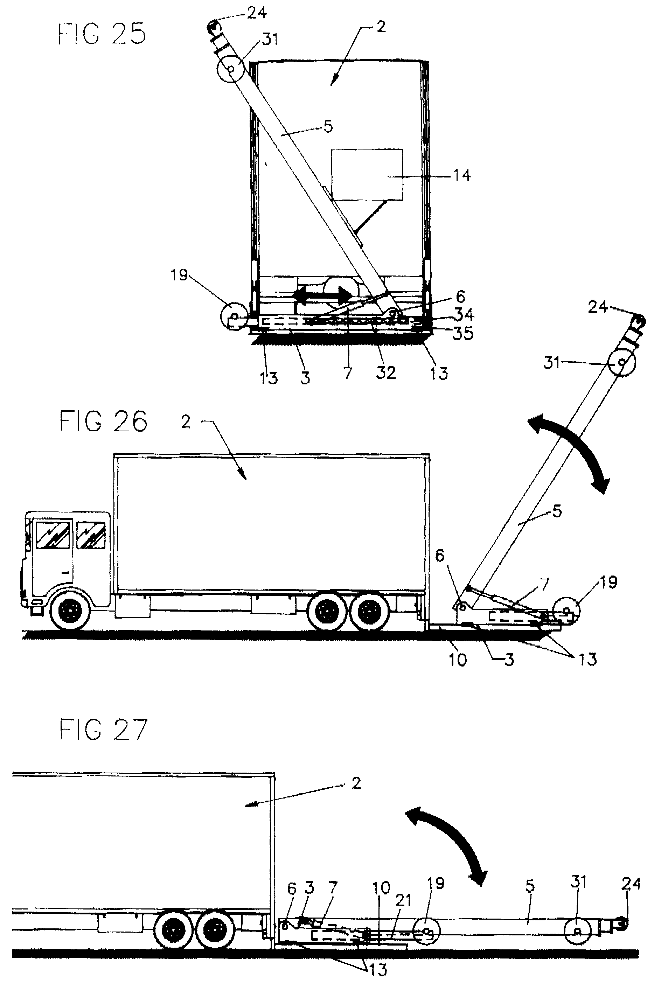

Fig. 24 shows a plan view of the assembly of fig. 23. From this position, the ladder lift 5 can be rotated around the vertical shaft 18 to the position as shown in fig. 25. For a still easier adjustment of the ladder lift 5, the supporting frame 15 can consist of a sliding frame 34 and a basic frame 35, with the sliding frame 34 being connected to the rotating ring 17. The sliding frame 34 is movably and securably connected to the basic frame 35 by means 32. The rotating frame 16 connected to the ladder lift 5 can then be moved in the direction of the arrow X in fig. 25, without the need for releasing the locking means 13.

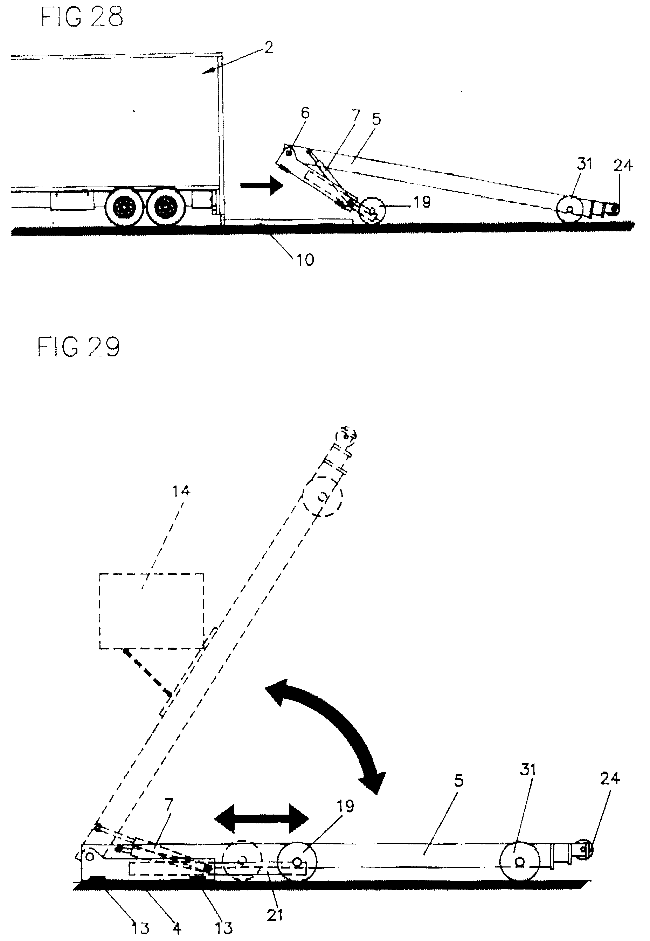

Fig. 26 shows the possibility of rotating the ladder lift across 180° around the shaft 18 from the position shown in fig. 28, so that the ladder lift unit 3 can be moved to the desired place of arrangement as indicated in fig. 29. After securing the basic portion 4 by means of the locking means 13, the ladder lift 5 can be brought in the operating position by means of the pressurized fluid cylinder 7.

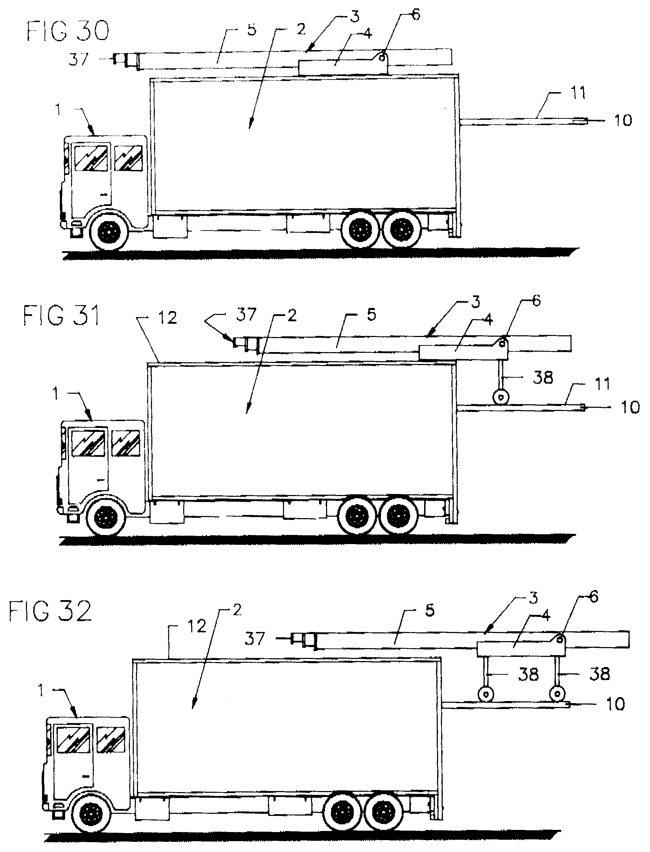

The figures 30 to 34 show the possibility, that the loading lift of the vehicle 1 can be constructed such, that the loading platform 10 can not be brought upward to the level of the roof of the container 2.

The ladder lift unit 3 can then be constructed such, that after sliding or moving the basic portion 4 of the unit backwards over a certain distance, a support 38 can be folded down from the basic portion 4, or be attached thereto, as indicated in fig. 31. Subsequently, the basic portion 4 can be pushed further backwards and a next support 38 can be folded out or be attached to the basic portion 4.

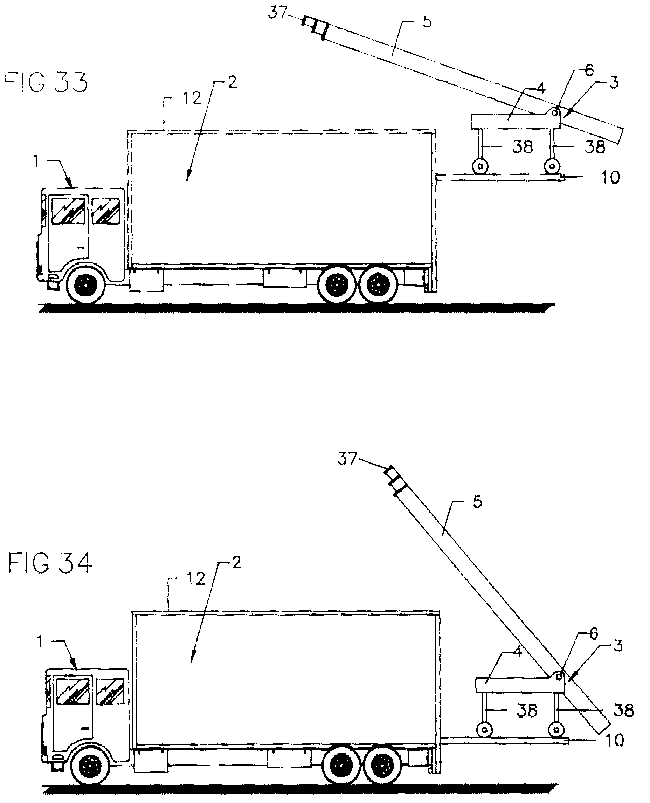

This situation is shown in fig. 32. Fig. 33 indicates that the ladder lift 5 can be pivoted upwards in order to allow bringing the loading platform 10 of the loading lift downwards without the ladder lift 5 contacting the container 2.

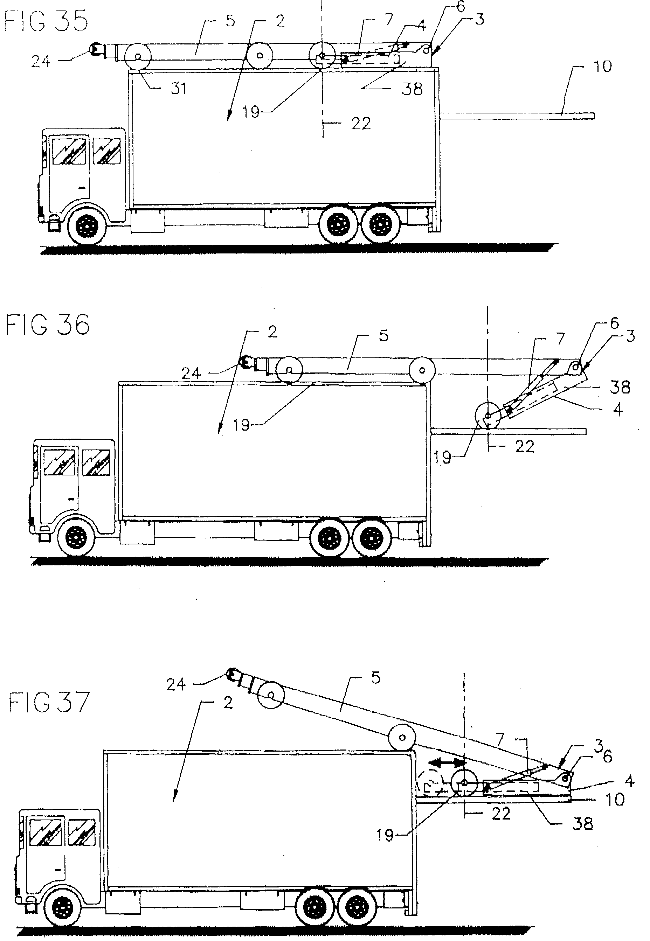

Figures 35 to 37 show an embodiment which corresponds largely to that according to figs. 30 - 34, but in which the ladder lift is provided with two pairs of wheels 31. In the embodiment according to fig. 19, the ladder lift was provided with only one pair of wheels 39. The loading platform 10 of the loading lift again can not be brought up to the roof of the container. According to fig. 36, the ladder lift can be moved backwards, after which the support 38 can be pivoted downwards. The support 38 can essentially be represented by the basic portion 4. The wheels 19 connected to the support can alternatively be telescoped out and the loading platform can be moved further downward in a known way as shown in other embodiments.

It will be obvious, that only a few possible embodiments of an assembly according to the invention have been illustrated in the drawing and described above, and that many modifications can be made without being beyond the inventive idea.

## Claims

**1.** Assembly of a vehicle (1) provided with a container (2), such as a removal van, a furniture removal van or the like and a ladder lift unit (3), comprising a basic portion (4), a ladder lift (5) pivotably connected therewith and means for bringing the ladder lift into a certain position in relation to the basic portion and securing it, characterized in that the vehicle (1) and the ladder lift unit (3) are executed such, that when the ladder lift unit is not needed, it can be brought on to the roof of the container (2) of the vehicle (1)in such a position that in transport position, the ladder lift (5) of the ladder lift unit is in longitudinal direction and in almost horizontal position on the roof of the container (2) of the vehicle (1).

**2.** Assembly according to claim 1, characterized in that the vehicle (1) has a loading lift (8) and the loading plane (11) of the loading platform (10) of said loading lift movable in vertical direction, can be brought in substantially the same plane as the plane (12) of the roof of the container (2) of the vehicle (1) on which the ladder lift unit (3) is situated and the ladder lift unit and/or the container (2) is provided with means, in the shape of one or more wheels (19) or the like, for bringing the ladder lift unit (3) on the loading platform (10) of the loading lift (8) and vice versa.

**3.** Assembly according to claim 1 or 2, characterized in that means (13) are provided for locking the ladder lift unit (3) to the roof of the container (2), to the loading platform (10) or to the hoisting means.

**5.** Assembly according to one of the preceding claims, characterized in that the wheels (19) connected to the basic portion (4) of the ladder lift unit (3) are situated at that side of the basic portion which in transport position is directed towards the telescopic free end of the ladder lift (5).

**6.** Assembly according to claim 5, characterized in that the wheels are mounted to a support or supports (21) which are movable in relation to the basic portion (4), substantially in longitudinal direction of the vehicle (1), when the ladder lift unit (3) has been mounted thereon.

**7.** Assembly according to claim 5, characterized in that the support or supports (21) have been substantially movably incorporated in the plane of the basic portion (4) and can be blocked in telescoped-out position.

**8.** Assembly according to claim 5, characterized in that the wheel or wheels have been mounted to means (28), which are connected to the basic portion (4) in such a way, that the wheels can be brought at a greater distance from the basic portion in almost vertical direction.

**9.** Assembly according to one of the preceding claims, characterized in that a wheel (27) can be releasably connected to the ladder lift (5), which wheel is at a distance from the wheels (19) connected to the basic portion (4), and is adjustable in vertical height in relation to the ladder lift (5).

**10.** Assembly according to one of the preceding claims, characterized in that the ladder lift (5), at a free end (37) thereof, has been provided with at least one wheel (31) which, with the ladder lift (5) in horizontal position, extends to underneath the ladder lift for supporting the free end of the ladder lift in moving the ladder lift unit (3).

**11.** Assembly according to one of the preceding claims, characterized in that the basic portion (4) consists of a supporting frame (15) and a rotating frame (16), with which the ladder lift (5) has been pivotably connected, in which means, such as a rotating ring (17), are situated between both frames (15, 16), such that the frames can rotate in relation to one another around a shaft (18), which is substantially square to the plane of the basic portion (4).

**12.** Assembly according to claim 11, characterized in that the supporting frame can consist of a sliding frame (34) and a basic frame (35), the sliding frame being connected to the ladder lift (5), whether or not by a rotating frame (16), and means (32) being present between both first-mentioned frames (34, 35), for slidably and securably connecting both of these frames (34, 35).

**13.** Assembly according to claim 11, characterized in that the rotating frame (16) consists of a sliding frame and a basic frame, the sliding frame being connected to the ladder lift (5) and means being present between both last-mentioned frames, for slidably and securably connecting both frames.

**14.** Assembly according to one of the claims 11, 12 or 13 in combination with one of the claims 5 - 7, characterized in that one or more wheels have been connected to the rotating frame.

**15.** Assembly according to one or more of the preceding claims, characterized in that the basic portion (4) of the ladder lift unit (3) is provided with means (38) for supporting the basic portion (4) in relation to the loading platform (10) of the loading lift (8) when the basic portion (4) has been mounted at a distance above the loading plane (11) of the loading platform (10) situated under the plane of the roof of the container (2).

**16.** Assembly according to claim 15, characterized in that the means (38) for supporting the basic portion (4) on the loading platform (10) of the loading lift (8) can be collapsible or mountable supports which may be provided with wheels and locking parts.

**17.** Assembly according to one of the preceding claims, characterized in that the ladder lift can have the shape of a telescopically slidable guiding profile, of a hoisting device or the like.

**18.** Vehicle which can be part of the assembly as described in one or more of the preceding claims.

**19.** Ladder lift unit which can be part of the assembly as described in one or more of the claims 1-9.
